# FASCICULE DE BREVET EUROPEEN

(11) **EP 4 410 512 B1**
(45) Date de publication et mention de la délivrance du brevet: **11.12.2024**
(21) Numéro de dépôt: 24153753.9
(22) Date de dépôt: 24.01.2024
(51) Int. Cl.: B29B 17/00, B29B 17/04, B29C 70/00, B29C 70/08, B29D 99/00, B29K 105/08

(54) **PROCÉDÉ POUR LA REVALORISATION DES CHUTES DE MATÉRIAUX COMPOSITES THERMOPLASTIQUES**
VERFAHREN ZUR VERWERTUNG VON ABFÄLLEN AUS THERMOPLASTISCHEN VERBUNDWERKSTOFFEN
PROCESS FOR RECOVERING THE RESIDUE OF THERMOPLASTIC COMPOSITE MATERIALS

(30) Priorité: 02.02.2023 FR 2301010
(43) Date de publication de la demande: 07.08.2024
(73) Titulaire: Daher Aerospace, 94310 Orly (FR)
(72) Inventeur: VAUDOUR, Julie, 44860 Pont Saint Martin (FR); DAUSSEINS, Julie, 44800 Saint Herblain (FR)
(74) Mandataire: Hamann, Jean-Christophe

(56) Documents cités:
- EP-A1- 0 643 093
- WO-A1-2021/259757
- DAY R J ET AL: "Recycling of APC-2 offcuts", COMPOSITES MANUFACTURING, BUTTERWORTH SCIENTIFIC, GUILDFORD, SURREY, GB, vol. 5, no. 3, 1 September 1994 (1994-09-01), pages 187 - 193, XP023627289, ISSN: 0956-7143, [retrieved on 19940901], DOI: 10.1016/0956-7143(94)90028-0

## Description

### Domaine technique

L'invention appartient au domaine de la mise en oeuvre des matériaux composites à matrice polymère thermoplastique. Plus particulièrement l'invention appartient au domaine du recyclage notamment, mais non exclusivement, dans le contexte d'une économie circulaire.

### Technique antérieure

Les matériaux composites à matrice polymère thermoplastique, plus particulièrement les composites à fibres continues, présentent de nombreux avantages en termes de mise en oeuvre et de caractéristiques mécaniques et chimiques, plus particulièrement, mais non exclusivement dans la construction aéronautique.

La capacité de mise en oeuvre de ces matériaux par des techniques qui s'apparentent à celle de mise en oeuvre des matériaux métalliques, notamment, mais non exclusivement par l'estampage, conduit à des chutes de matière lors de la mise en oeuvre initiale résultant, par exemple du découpage de panoplies de flans et du détourage des pièces formées.

Ces chutes peuvent représenter jusqu'à 50 % de la matière utilisée, dans un processus en grande série, voire plus lorsque le flux de production ne permet pas une optimisation des panoplies.

Si le polymère thermoplastique constituant la matrice est généralement considéré comme recyclable, il n'en va pas de même pour le composite, où les chutes dudit composite mêlent polymère et fibres.

Or, plus particulièrement dans le domaine aéronautique, tant le polymère constituant la matrice que les fibres de renfort sont des matériaux à haute performance et d'un coût élevé.

De plus, spécifiquement dans le domaine aéronautique la matière doit être certifiée et à cette fin doit répondre à des règles d'assurance qualité et de traçabilité au cours de son élaboration, ce qui renforce encore la valeur, ou plus précisément, la perte de valeur associée à la mise en décharge de ces chutes, constituées d'une matière certifiée aéronautique.

D'une manière générale, les procédés visant à séparer la matrice des fibres afin de viser des filières de recyclage séparées ne sont pas économiquement ni énergétiquement viables à ce jour.

De plus, la diversité des taux de fibres, des matrices et des épaisseurs de pièces rend difficile un recyclage en boucle ouverte.

Le document WO 2021/259757 décrit un procédé pour le recyclage de chutes composites CF/PEKK.

Le document DAY R et al. : "Recycling of APC-2 offcuts", COMPOSITES MANUFACTURING, BUTTERWORTH SCIENTIFIC, GUILDFORD, SURREY, GB, vol. 5, no. 3, 1 September 1994 (1994-09-01), pages 187-193, décrit un procédé pour le recyclage de chutes de découpes de préimprégnés de type CF/PEEK.

Le document EP 0 643 093 décrit le recyclage de composite renforcés par des fibres de verre dans une matrice thermoplastique polypropylène.

### Résumé de l'invention

L'invention vise à améliorer le taux d'utilisation de la matière en valorisant les chutes lors de la mise en oeuvre
A cette fin l'invention concerne un procédé pour la fabrication de deux pièces composites tel que décrit dans la revendication 1.

Ce procédé permet d'utiliser au mieux la matière notamment la matière à forte valeur ajoutée tels que les composites à matrice thermoplastique et fibres à haute performance.

Selon un effet surprenant, le procédé permet de réaliser la pièce renforcée par des fibres discontinues avec un taux de fibres supérieur à ce qu'il est possible d'obtenir avec les procédés de l'art antérieur et les compounds disponibles commercialement.

L'invention est mise en oeuvre selon les modes de réalisation et les variantes exposées ci-après lesquels sont à considérer individuellement ou selon toute combinaison techniquement opérante.

Selon un exemple de mise en oeuvre le premier polymère est un PPS, le taux volumique de fibres continues est supérieur à 40 % et le taux volumique de fibres discontinues est supérieur à 40 %.

Préférentiellement, une plus grande longueur des tronçons de composites obtenus à l'étape v) est comprise entre 2 mm et 15 mm préférentiellement entre 4 mm et 10 mm et plus préférentiellement entre 8 mm et 10 mm.

Selon un mode de réalisation, l'étape vi) comprend l'ajout, lors du compoundage, d'un deuxième polymère ayant une deuxième température de fusion et miscible dans le premier polymère, aux chutes broyées. Cet ajout permet à la fois de contrôler le taux de fibres dans le granulat et la température de fusion du granulat.

Ainsi, la température de fusion du deuxième polymère peut être inférieure, supérieure ou égale à celle du premier polymère.

Selon un exemple de réalisation le premier polymère est choisi parmi PEEK, PEK et PAEK et dans lequel le deuxième polymère est choisi parmi PEEK, PEK, PAEK et LMPAEK, le taux volumique de fibres continues est supérieur à 50 % et le taux volumique de fibres discontinues est supérieur à 40 %.

Selon un mode de mise en oeuvre le compound obtenu à l'étape vi) est un fil bobiné et l'étape vii) est réalisée par un procédé de fabrication additive mettant en oeuvre la fusion du fil.

Selon un autre mode de mise en oeuvre, le compound à l'étape vi) est un granulé et l'étape vii) est réalisée par injection plastique.

Ainsi, le procédé de l'invention offre plusieurs alternatives pour la réalisation de la pièce renforcée par des fibres discontinues.

Les étapes vii) et viii) peuvent être réalisées par surmoulage de la pièce rapportée sur la pièce structurelle.

Selon une autre variante, l'étape viii) est réalisée par soudure de la pièce rapportée sur la pièce structurelle.

Selon encore une autre variante, l'étape viii) est réalisée par co-consolidation de la pièce rapportée et de la pièce structurelle.

Bien entendu 2 ou plus de ces variantes peuvent être combinés lors de la réalisation d'une même pièce structurelle.

Ainsi, selon un mode de réalisation, le résultat de l'ajout d'un polymère vierge au broyat avant le compoundage a pour effet que la deuxième température de fusion est supérieure à la première température de fusion. Ce mode de réalisation est par exemple adapté à la réalisation d'un assemblage de la deuxième pièce sur la pièce structurelle par surmoulage ou par co-consolidation.

Alternativement, le résultat de cet ajout de polymère vierge est aussi d'obtenir une deuxième température de fusion inférieure à la première température de fusion. Ce mode de mise en oeuvre est par exemple adapté à une réalisation de la deuxième pièce en moulage par injection plastique
Selon un exemple de mise en oeuvre, le premier polymère est un LMPEAK et le deuxième polymère est choisi parmi PEEK et PEKK.

Selon un autre exemple de réalisation, le premier polymère est un PEI et le deuxième polymère est choisi parmi PEEK, PEKK et LMPAEK.

Ces deux exemples de mise en oeuvre conduisent à un compound ayant une température de fusion supérieure à celle du polymère constituant la matrice de la pièce structurelle, ces modes de mise en oeuvre étant plus adaptés au surmoulage et à al co-consolidation.

Alternativement, les combinaisons inverses produisent un compound dont la température de fusion est inférieure à celle du polymère de la matrice de la pièce structurelle.

### Brève description des dessins

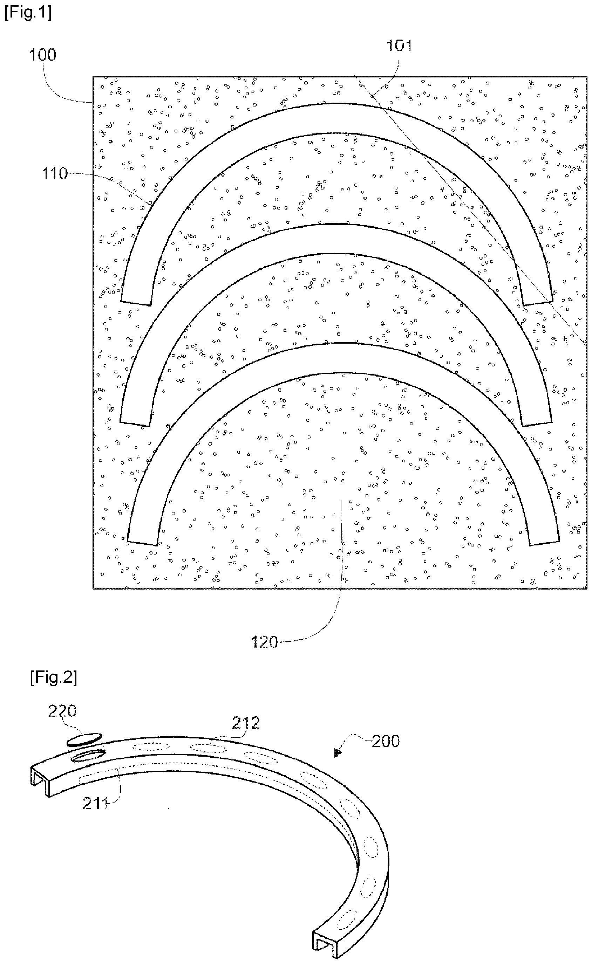

L'invention est mise en oeuvre selon les modes de réalisation préférés et les exemples, nullement limitatifs, exposés ci-après en référence aux figures 1 à 6 dans lesquelles :
**Fig.1**
   [Fig.1] est une vue de dessus d'un exemple de flans découpés en panoplie dans une plaque consolidée renforcée par des fibres continues ;
**Fig.2**
   [Fig.2] montre selon une vue en perspective des exemples simplifiés de détourages réalisés sur un pièce structurelle obtenue par estampage d'un des flans de la [Fig.1] ;
**Fig.3**

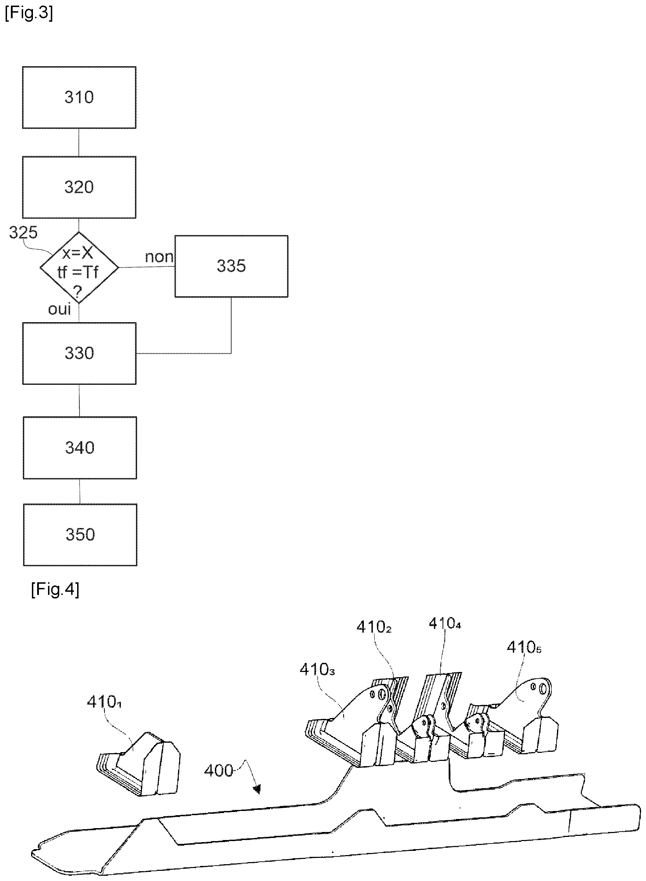

   [Fig.3] est un organigramme résumant la méthode de l'invention ;
**Fig.4**
   [Fig.4] est une vue en perspective et en éclaté d'un exemple de réalisation d'un longeron mettant en oeuvre le procédé de l'invention ;
**Fig.5**

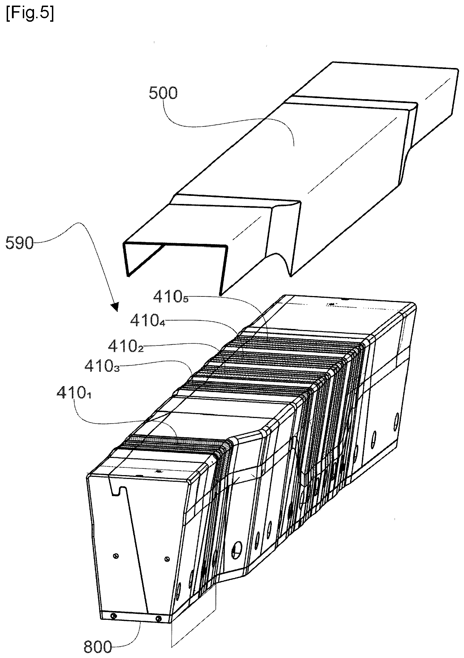

   [Fig.5] montre selon une vue en perspective et en éclaté un exemple d'outillage pour la réalisation du longeron de la [Fig.4] ;
**Fig.6**

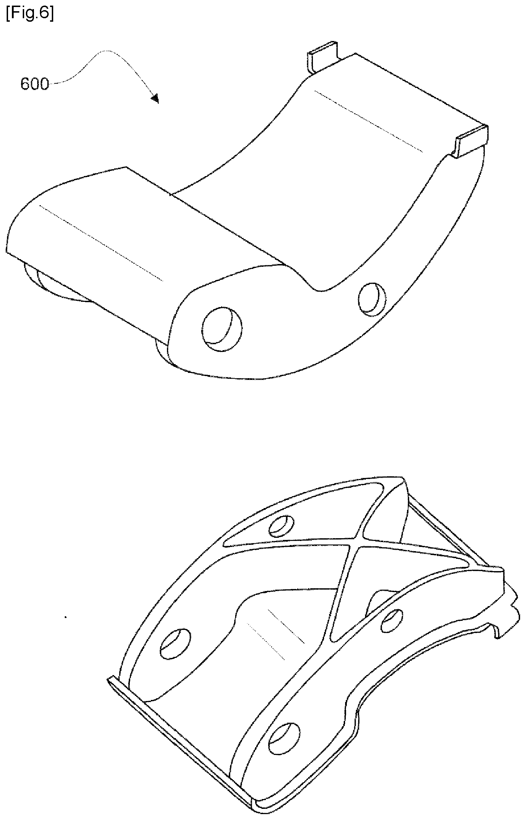

   [Fig.6] montre selon deux vues en perspective de dessus et de dessous un exemple de réalisation d'une pédale de palonnier par la mise en oeuvre du procédé de l'invention.

### Description des modes de réalisation

Fig.1 selon un exemple de réalisation, une pièce composite à matrice thermoplastique est obtenue à partir d'un flan (110), c'est-à-dire une ébauche essentiellement plate et détourée selon un contour appropriée, lequel flan est estampé entre un poinçon et une matrice après que ledit flan ait été chauffé à une température de l'ordre de la température de fusion de la matrice polymère.

Selon un exemple de réalisation le flan (110) est par exemple découpé dans une plaque composite consolidée (100) renforcée par des fibres comprenant des fibres continues (101), c'est-à-dire des fibres s'étendant continûment d'un bord à un autre de la plaque consolidée (100) et qui, après découpe du flan s'étendent d'un bord à un autre du flan (110).

A titre d'exemples non limitatifs, la plaque (100) est constituée d'un polymère thermoplastique PEEK ( polyétheréthecétone), PEKK (poléthercétonecétone), PAEK ( polyaryléthercétone), PEI (polyétherimide), PPS (polysulfure de phénylène) ou de tout autre polymère thermoplastiques.

Les renforts fibreux sont des fibres de carbone, de verre ou encore d'aramide sans que ces exemples ne soient limitatifs.

La découpe du flan est par exemple réalisée au moyen d'un jet d'eau abrasif haute pression.

Plusieurs flans, organisés en panoplie, sont découpés dans une telle plaque (100). Toutefois, même en optimisant l'imbrication des flans découpés dans la plaque, il subsiste une chute sous la forme d'un squelette (120, rempli en pointillés sur la figure) lequel représente une part significative de la masse de la plaque initiale, typiquement comprise entre 30 % et 50 % du volume de la plaque consolidée avant détourage de la panoplie,

[Fig.2] après estampage, la pièce obtenue est détourée sur ses bords pour éliminer une partie non consolidée inhérente au procédé d'estampage et est également détourée en section courante selon diverses trajectoires (211, 212), notamment pour y créer des lumières.

Ces détourages sont par exemple réalisés en fraisage et produisent également des chutes (220) constituées de la même matière que la pièce structurelle (200).

Selon l'art antérieur, ces chutes, tant les squelettes de panoplie que celles résultant des détourages de la pièce brute d'estampage, sont mises au rebut et doivent être traitées selon un processus spécifique en déchetterie, lequel entraîne des surcoûts.

Il n'existe pas, à ce jour, de filière industrielle de recyclage des chutes de ces matériaux composites renforcés par des fibres continues.

Au mieux, ces chutes sont brûlées dans un processus dit de valorisation énergétique lequel est émetteur de gaz à effet de serre.

Les difficultés de recyclage tiennent notamment au fait du mélange du polymère constituant la matrice avec des renforts fibreux et d'autre part, à l'échelle d'une installation de production industrielle, à la diversité des matériaux traités tant du point de vue des matrices que des fibres de renfort et que des épaisseurs.

Compte tenu des opérations de tri qui seraient nécessaires, de la difficulté de différencier visuellement la nature des chutes et de la faible valeur du déchet en tant que tel, des telles opérations de recyclage selon des filières industrielles classiques impactent les coûts de production de manière trop importante au point, qu'à ce jour, il reste plus rentable de payer pour un traitement spécial des déchets que de mettre en place des processus permettant le recyclage externe.

De plus, les procédés d'obtention des pièces composites à matrice thermoplastique et renfort fibreux continu ne sont pas limités à l'estampage de flans tirés de plaques consolidées mais peuvent mettre en oeuvre d'autres procédés tels que des flans partiellement consolidés obtenus par placement de fibres, de la consolidation en forme de plis non consolidés, etc. sans que ces exemples ne soient ni exhaustifs ni limitatifs.

Or, quelque soit le procédé, des chutes sont produites, ces chutes étant constituées de matières ayant subi des histoires thermiques différentes à composition équivalente, fonctions du procédé mis en oeuvre pour la réalisation de la pièce renforcée par des fibres continues, histoires thermiques qui se traduisent par des cohésions et notamment des taux de porosités différents, même si ceux-ci restent dans de strictes limites acceptables.

L'invention vise un recyclage qualifié d'interne dans lequel les chutes sont utilisées, après traitement approprié tel qu'exposé ci- après comme matériau pour la réalisation de pièces à renfort non continu.

Le procédé de l'invention présente en outre l'intérêt de pouvoir combiner des chutes d'une même matière mais issues de procédés de mise en oeuvre différents en effaçant les histoires thermiques associées à ces procédés et en fournissant une matière homogène.

Pour autant, de manière surprenante, le procédé de l'invention tire avantage de la mise en oeuvre antérieure du matériau en permettant d'atteindre des taux de renfort supérieurs à ce qu'il est possible d'obtenir en utilisant une matière première non issue du procédé de l'invention.

Dans les domaines industriels où la matière doit être pré-qualifiée, notamment dans le domaine aéronautique, la matière issue du procédé de l'invention bénéficie, au moins partiellement, de la qualification de la matière dont sont issues les chutes, facilitant ainsi ce processus.

Dans certains modes de réalisation, pour la fabrication de pièces comprenant une pièce structurelle (200) renforcée par des fibres continues sur laquelle sont rapportées d'autres pièces tels que des supports ou des taquets, ces pièces rapportées, obtenues à partir de chutes issues de la fabrication de la pièce structurelle sont particulièrement adaptées à être intégrées à la dite pièce structurelle, ou à un pièce structurelle issue du même lot, de manière intégrale, sans fixation, par des procédés tels que la soudure, la co-consolidation ou le surmoulage, avec une miscibilité parfaite des polymères en présence.

Aussi, les pièces obtenues à partir de la matière recyclée issue des chutes, sont généralement des pièces à forte valeur ajoutée, du fait de leur taux de renfort élevé et de la nature de leur matrice polymère, et le fait de diriger les chutes vers une utilisation parfaitement identifiée dans une unité de production accroit très fortement la rentabilité de l'opération.

[Fig.3], à cette fin, l'invention concerne un procédé comprenant une première étape de collecte des chutes (310).

Selon un mode de réalisation particulier, non-limitatif, les chutes sont affectées au même processus de production que celui de la pièce structurelle de sorte qu'elles restent par exemple référencées dans l'ERP dans la même gamme générale.

### Broyage

Selon une étape de broyage (320) les chutes sont broyées, de sorte à constituer des tronçons de longueur appropriée , c'est-à-dire comprise entre 2 mm et 15 mm, préférentiellement entre 4 mm et 10 mm et plus préférentiellement entre 8 mm et 10 mm.

Selon un mode de réalisation le broyage comprend une première étape de concassage, visant à amener les chutes en tronçons dont une plus grande longueur est comprise en 10 mm et 100 mm, préférentiellement entre 10 mm et 50 mm.

Alternativement les chutes peuvent être découpées en de tels tronçons sur le moyen de détourage des flans.

Suit à l'opération de concassage, un tamisage est réalisé pour éliminer les tronçons d'une longueur inférieure à 10 mm.

Le broyage est préférentiellement réalisé par un broyeur à couteaux à vitesse lente, produisant des coupes nettes des tronçons sans écrasement et sans délamination à distance des bords des tronçons.

A cette fin [Fig.7], le broyeur met préférentiellement en oeuvre des couteaux (700) adaptés au composite évitant les efforts de coupe trop élevés et bourrages.

Selon un exemple de réalisation, un couteau comprend 2 dents (701, 702) offrant ainsi un dégagement (703) comparativement à des couteaux traditionnels, utilisés notamment dans le broyage de carottes d'injection de matière plastique non chargée.

Selon cet exemple de réalisation, chacun des deux dents présente un angle de coupe γ compris entre 30° et 40°, préférentiellement entre 35° et 40°, de sorte à réduire les efforts de coupe, un angle de dépouille α compris entre 20° et 30° pour limiter les coincements et un angle de taillant β d'au moins 30° de sorte à offrir une section résistante suffisante à la dent, avec α+β+γ = 90°.

Suite à l'opération de broyage, le broyat est tamisé de sorte à éliminer les tronçons d'une longueur inférieure à 2 mm, selon un mode de réalisation préféré, le broyat est tamisé pour éliminer les tronçons d'une longueur inférieure à 6 mm.

Le broyat est lavé, notamment pour éliminer toute présence d'abrasif lorsque les chutes proviennent une découpe au jet d'eau, les éventuelles particules métalliques présente dans le broyat sont retirées par un filtre magnétique, puis le broyat est séché en étuve, par exemple à 150°C pendant 6 heures.

Ainsi le broyat est constitué de tronçons dont une plus grande longueur moyenne est statistiquement comprise entre 2 mm et 15 mm et préférentiellement 4 mm et 10 mm et plus préférentiellement entre 6 mm et 10 mm à +/- 3 écarts types depuis la moyenne. Le broyat comprend à la fois du polymère et des tronçons de fibres issus des fibres continues de la pièce structurelle le polymère étant au moins partiellement lié aux fibres.

La création des chutes résulte de découpes ou de détourage, de plaques consolidées pour les panoplies de flans ou de pièces semi-finies ayant fait l'objet d'une consolidation par exemple lors d'un estampage, d'une consolidation en forme ou au moins d'une consolidation partielle lors d'un drapage par placement de fibres à grande vitesse, ou encore de plis préimprégnés. De fait, le matériau compris dans les chutes a, dans la plupart des cas, déjà subi un cycle thermomécanique de fusion du polymère constituant la matrice, comprenant notamment une compression un dégazage pour une imprégnation et une liaison intime des renforts et de la matrice et des taux de porosité inférieurs à 5 % voir communément inférieur à 2 %.

### Compoundage

Selon une étape de compoundage (330) le broyat est placé dans une extrudeuse afin de réaliser un compoundage.

Le compoundage est un procédé connu de l'art antérieur consistant à passer le broyat dans une extrudeuse à vis afin d'extruder un fil sensiblement cylindrique à travers une filière.

Ledit fil est un fil composite comprenant un polymère thermoplastique et des fibres discontinues correspondant aux portions de fibres de renfort initialement continues et comprises dans la pièce structurelle puis présentes dans les tronçons du broyat.

Les fibres discontinues peuvent être des fibres courtes avec un rapport d'aspect l/d inférieur à 500 où l est la longueur de la fibre et d le diamètre de la fibre ou des fibres longues avec un rapport l/d supérieur à 500. La longueur des fibres dépend des dimensions des tronçons dans le broyat ainsi que des conditions de mise en oeuvre de l'opération de compoundage.

Cependant le compoundage mis en oeuvre pour la revalorisation des chutes diffère d'un compoundage classique par au moins deux caractéristiques :
- les renforts sont déjà présents dans le broyat alors que pour un compoundage classique les renforts sont ajoutés en tant que charge au polymère fondu au niveau de la vis lors de l'extrusion ;
- le taux de renforts dans le broyat et dans le fil extrudé sont très supérieurs à ce qui est classiquement utilisé en compoundage ou le taux de fibres atteint très rarement 40 % alors que le procédé de valorisation des chutes permet d'atteindre des taux de renforts supérieurs à 40 % voire supérieur à 50 % en volume.

Ces différences ont des conséquences sur les conditions de mise en oeuvre de l'étape de compoundage.

Ainsi, à la différence d'un compoundage classique où la charge de renfort est introduite soit sous forme de charge seule soit sous la forme de pellets pré-compoundés comprenant la charge et calibrés en forme, le renfort est ici introduit sous forme de broyat de forme non calibrée comprenant un fort taux de fibres liées au polymère.

L'extrudeuse est un extrudeuse mono-vis ou bi-vis mais dont le ratio L/D de la longueur de la longueur totale de la vis par rapport au diamètre de la partie taillée est préférentiellement supérieur à 30 voir supérieur à 40. Cette configuration permet en effet une meilleure homogénéisation de la matière.

[Fig.8] selon un exemple de réalisation schématique, le dispositif d'extrusion comprend un fourreau (810) dans lequel tourne une ou deux vis (820) selon qu'il s'agisse d'une extrudeuse mono-vis ou bi-vis.

L'ensemble du dispositif d'extrusion est constitué par l'assemblage de plusieurs longueurs (800) de ce type.

Schématiquement une telle longueur (800) la vis (820) comprend une zone d'alimentation (821) une zone de chauffe (822) où le matériau est soumis à une sollicitation mécanique intense qui entraîne sa fusion et une zone de malaxage (823) pour homogénéiser le matériau. La longueur des différentes zones varie selon les extrudeuses. Le pas de la vis sans fin ainsi que la profondeur des filets se réduisent en passant de la zone d'alimentation (821) jusqu'à la fin de la zone de chauffe (823) dans le sens de progression de la matière (850).

Avantageusement, le fourreau de la vis ou des vis d'extrusion est préchauffé à une température de l'ordre de 0,8 à 0,9 Tf où Tf est la température de fusion du polymère constituant la matrice du broyat. Ce préchauffage du fourreau permet une élévation de la température de la matière plus rapide que sous le seul effet de la compression et du cisaillement qui lui sont imposés par la vis.

Au cours de l'extrusion sous l'effet de la sollicitation mécanique la température dans le fourreau atteint au moins Tf.

Le broyat est introduit dans une zone d'alimentation (821) et le dispositif d'extrusion comprend au moins 2 longueurs (800) successives entre le point d'alimentation du broyat et une troisième longueur conduisant à la filière .

Ainsi, dans le cas du compoundage direct du broyat sans apport de matière, par exemple dans le cas de chute d'un composite carbone PPS, le dispositif d'extrusion comprend au moins 3 longueurs (800) deux longueurs suite à l'alimentation en broyat et une longueur menant à la filière.

Dans le cas d'un apport en matière, soit pour modifier la température de fusion et/ou pour modifier le taux de fibres, la matière d'apport est d'abord introduite dans le dispositif d'extrusion, et le point d'introduction du broyat est réalisé au moins une longueur et préférentiellement deux longueurs (800) en aval du point d'introduction de la matière d'apport dans le sens de progression de la matière. Puis deux longueurs (800) sont nécessaires avant une dernière longueur conduisant à la filière. Aussi, dans cette configuration le dispositif d'extrusion comprend au moins 4 longueurs et préférentiellement 5 longueurs (800).

Le préchauffage sur la longueur du dispositif d'extrusion, ainsi que le minimum de deux longueurs à la suite de l'introduction du broyat jusqu'à la longueur finale conduisant à l'extrusion, sont nécessaires pour obtenir une bonne homogénéité de la matière. Il est possible de considérer plus de 2 longueurs entre l'introduction du broyat et la dernière longueur menant à l'extrusion, toutefois dans ce cas la longueur des fibres dans le fil extrudé est réduite.

En sortie de filière le fil extrudé est refroidi à l'eau. Selon un mode de réalisation, pour éviter un refroidissement trop brutal conduisant à la création de contraintes dans le fil qui se déforme alors sous l'effet de celles-ci, le bain de refroidissement peut être préchauffé à une température comprise entre 70°C et 95°C.

Selon des modes de réalisation, le fil composite ainsi extrudé est bobiné pour être ultérieurement utilisé, par exemple, dans un procédé de fabrication additive par fusion de fil.

Selon un autre mode de réalisation, le fil extrudé est coupé en tronçons, par exemple d'une longueur de l'ordre de 2 mm, afin de constituer des granulés adaptés à l'injection plastique, lesdits granulés comprenant des fibres courtes.

Le taux de fibres atteignable dépend de la viscosité du polymère à la température de compoundage, et de la capacité dudit polymère à imprégner les fibres de sorte que le fil extrudé soit cohésif.

Sans être lié par une quelconque théorie, il semble que l'imprégnation des fibres par le polymère et la cohésion du composite dans celles-ci soit, au moins en partie, héritées dans le fil extrude, des opérations de mise en oeuvre de la matière constituant la chute lors de la réalisation de la pièce structurelle.

Ainsi le procédé permet au fil de conserver sa cohésion jusqu'à des taux volumiques de fibres dans le fil ou le granulé pouvant atteindre 60 %.

De tels taux volumiques de fibres discontinues sont très au-delà de ceux obtenus dans les granulés disponibles commercialement et qui ne sont pas issus du procédé de l'invention.

Le taux de fibres dans le fil extrudé peut être contrôlé en ajoutant des granules ou copeaux de polymère vierge au broyat durant le compoundage, de sorte à atteindre un taux de fibres inférieur à celui compris dans les chutes.

Le polymère ajouté préalablement compoundage peut être le même que celui constituant la matrice des chutes, ou être de nature différente, à condition qu'il soit miscible avec le polymère original, voir une combinaison des deux.

L'ajout d'un polymère différent, miscible dans le premier, permet également d'ajuster le point de fusion du fil ou du granulé.

Ainsi si (325), après broyage, le taux de fibre x du broyat est égale au taux de fibres X visé dans le granulé et si la température de fusion tf du broyat est égale à la température de fusion Tf visée pour le granulé alors le compoundage est réalisé directement à partir du broyat. Sinon au cours d'une étape d'ajustement (335), un polymère est ajouté au broyat au cours du compoundage.

Le polymère ajouté au cours de l'étape d'ajustement doit être miscible avec le premier polymère constituant la matrice des chutes, il peut s'agir du même polymère, dans ce cas seul le taux de fibres du fil extrudé est modifié, ou il peut s'agir d'un autre polymère, dans ce cas, à la fois le taux de fibres et la température de fusion du fil sont modifiés par rapport à celui de la matrice du composite constituant la pièce structurelle.

Selon des exemples de mise en oeuvre, le polymère constituant la matrice des chutes est de la famille des poly(aryléthercétone) PAEK et le polymère ajouté lors de l'étape d'ajustement est également de la famille des PAEK ou un PEI.

Les PAEK constituent une famille de polymères thermoplastiques ayant une stabilité élevée à haute température ainsi que des caractéristiques mécaniques élevées, ils sont, par suite, particulièrement adaptés aux applications structurelles aéronautiques.

La famille des PAEK comprend notamment PEK, PEEK, PEKK, PEEKK, PEKEKK et LMPAEK^{®} à bas point de fusion.

Par exemple si la matrice des chutes est constituée d'un PAEK à basse température de fusion (LMPAEK^{®}) l'ajout de PEEK ou de PEKK au broyat au cours du compoundage permet d'augmenter la température de fusion du granulé.

A l'inverse si le polymère constituant la matrice des chutes est par exemple un PEEK l'ajout de LMPAEK ou de PEI au broyat lors de l'opération de compoundage permet d'abaisser la température de fusion du granulé en comparaison de la température de fusion du polymère constituant la matrice des chutes.

Le fil extrudé ou le granulé sont utilisés pour réaliser une pièce renforcée par des fibres discontinues au cours d'une étape de fabrication (340), par fabrication additive ou par un procédé de moulage par injection plastique.

Selon exemple de réalisation la pièce réalisée lors de cette étape de fabrication (340) est assemblée à une pièce structurelle lors d'une étape d'intégration (350), préférentiellement par un procédé sans fixation.

A titre d'exemples non limitatifs de tels procédés sont :
- le surmoulage, au cours duquel la pièce rapportée est injectée directement sur la pièce structurelle, dans ce cas l'étape d'ajustement (335) vise préférentiellement à obtenir un granulé ayant une température de fusion supérieur à celle du polymère constituant la matrice de la pièce structurelle ;
- la co-consolisation dans ce cas l'étape d'ajustement (335) vise préférentiellement à obtenir un granulé ayant une température de fusion supérieure à celle du polymère constituant la matrice de la pièce structurelle ;
- La soudure, dans ce cas l'étape d'ajustement (335) vise éventuellement à abaisser le tau de fibres discontinues dans le granulé sans en modifier la température de fusion.

Selon un exemple de réalisation la pièce structurelle est un cadre d'aéronef et la pièce rapportée est un support d'accessoire (« *bracket* » ) ou un taquet *(« cleat* ») liés à ce cadre.

Le compoundage soumet la matière broyée à une sollicitation thermomécanique sévère portant la matière en fusion. Cette sollicitation efface les défauts de cohésion, même faibles, présents dans les chutes du fait des procédés de mise en oeuvre y inclus le détourage, supprimant par exemples, porosités et délaminages, quoique de manière surprenante le procédé de l'invention tire avantage de l'imprégnation des fibres et de l'homogénéité du matériau obtenu au cours des mises en oeuvre antérieures de la pièce structurelle tels que consolidation, estampage ...

[Fig.4] selon un autre exemple, la pièce structurelle est un longeron (400) constitué d'un composite a matrice thermoplastique PAEK à température de fusion réduite (LMPAEKO) et comprenant un renfort fibreux continu de fibres de carbone correspondant à 60 % en volume de fibres (66 % en masse).

Ledit longeron comprend une pluralité de nervures (410₁...410₅). Selon un exemple de réalisation lesdites nervures sont réalisées par moulage en injection plastique avec un granulé obtenu à partir de chutes de détourage dudit longeron (400), en pratique, d'un ou plusieurs longerons similaires réalisés et détourés précédem ment.

Lesdites chutes sont broyées et additionnées d'un polymère vierge de type PEEK ou PEKK, miscible dans le LMPAEK^{®} , de sorte à accroître la température de fusion de la matrice polymère et à réduire le taux de fibres dans le granulé à un taux compris entre 40 % et 55 % en masse. Le fort taux de fibres atteignable par le procédé de l'invention permet d'atteindre les caractéristiques mécaniques visées pour les nervures.

[Fig.5] selon un exemple de réalisation, les nervures (410₁...410₅) sont placées dans un outillage mandrin (590), assemblé, de telle sorte que les semelles desdites nervures devant être assemblées avec des ailes du longeron sont affleurantes à la surface de l'outillage mandrin.

Une préforme (500) du longeron est drapée sur l'outillage mandrin (590), par exemple par placement automatique de fibres ou par drapage manuel de plis non tissés. Les plis réalisés, viennent en contact des semelles des nervures placées dans l'outillage mandrin (590).

L'ensemble est alors ensaché de manière étanche, tiré au vide et chauffé à une température égale ou supérieure à la température de fusion de la matrice de la préforme (500).

Cette température est inférieure à la température de fusion du polymère (modifié lors du compoundage) constituant la matrice des nervures, mais reste suffisante pour activer des phénomènes d'autohésion et de soudure aux interfaces entre ladite préforme (500) est les nervures (410₁...410₅) sans que ces dernières ne perdent leur cohésion et ne se déforment outre mesure.

La préforme (500) subit ainsi un cycle de pression - température apte à consolider le longeron et à intégrer les nervures.

Après démoulage le longeron est détouré pour lui conférer son profil définitif, les chutes issues de ce détourage sont utilisées pour fabriquer un granulé adapté au moulage par injection plastique des nervures.

Il est à noter que [Fig.4] et [Fig.5] représentent un démonstrateur de longeron composite l'homme du métier comprend que la longueur de voilure est près de 2 ordres de grandeur supérieure à la largeur des nervures, et que par conséquent le volume de chutes collecté lors du détourage final est suffisant pour réaliser une plusieurs de ces nervures.

[Fig.6] selon un autre exemple de réalisation des chutes d'un composite à matrice PPS renforcé par des fibres de carbone continues avec un taux volumique de 50 % (57 % massique) sont broyées puis formées en granulés sans apport de polymère vierge avant le compoundage.

Ces granulés sont utilisés, par exemple, pour obtenir par moulage par injection une pédale de commande de palonnier pour un aéronef. Cette pièce est traditionnellement réalisée en alliage d'aluminium, la forme de cette pièce rend sa réalisation en composite à renfort continu difficile voir impossible, et sa réalisation en injection plastique à partir d'un granulé disponible commercialement d'une part ne permet pas d'atteindre des taux de renfort suffisant et nécessiterait une qualification de la matière. L'utilisation d'un granulé obtenu à partir de chutes de pièces aéronautiques permet de résoudre ces deux problèmes, avec une pièce injectée (600) comprenant 57 % de fibres en masse (50 % en volume) et constitué d'une matière déjà qualifiée.

Les exemples ci-avant montrent que l'invention atteint le but visé et permet valoriser selon un procédé à forte valeur ajoutée des chutes de fabrication composite précédemment traitées comme des déchets ultimes.

## Revendications

1. Procédé pour la fabrication de deux pièces composites comprenant une pièce structurelle (200, 400) constituée d'un composite renforcé par des fibres continues, selon un taux volumique de fibres continues, dans une matrice constituée d'un premier polymère thermoplastique avec une première température de fusion, et une pièce composite (410, 600) comprenant un renfort fibreux comprenant des tronçons des fibres continues selon un taux de fibres volumique de fibres discontinues et une matrice thermoplastique avec une deuxième température de fusion et comprenant le premier polymère thermoplastique, le procédé comprenant des étapes consistant à :
i) obtenir une préforme composite (110, 500) à renfort continu adaptée à l'obtention de la pièce structurelle ;
ii) obtenir la pièce structurelle (200, 400) à partir de la préforme composite à renfort continu ;
iii) détourer la pièce structurelle (200, 400);
dans lequel les étapes i) et iii) produisent des chutes (120, 220) et qui comprend en outre les étapes consistant à :
iv) récupérer (310) les chutes (120, 220) produites aux étapes i) et iii) ;
v) broyer (320) les chutes récupérées à l'étape iv) pour obtenir un broyat constitué de tronçons de composites ;
vi) réaliser un compoundage (330) du broyat obtenu à l'étape v) pour obtenir un compound ;
vii) obtenir la deuxième pièce composite (410, 600) par mise en forme du compound obtenu à l'étape vi) ;
**caractérisé en ce qu'**il comprend une étape consistant à :
viii) lier la deuxième pièce composite à la pièce structurelle.

2. Procédé selon la revendication 1, dans lequel le premier polymère est un PPS, le taux volumique de fibres continues est supérieur à 40 % et le taux volumique de fibres discontinues est supérieur à 40 %.

3. Procédé selon a revendication 1, dans lequel une plus grande longueur des tronçons de composites obtenus à l'étape v) est comprise entre 2 mm et 15 mm préférentiellement entre 4 mm et 10 mm et plus préférentiellement entre 8 mm et 10 mm.

4. Procédé selon la revendication 1, dans lequel l'étape vi) comprend une étape d'ajustement (335) comprenant l'ajout, durant le compoundage, d'un deuxième polymère ayant une deuxième température de fusion et miscible dans le premier polymère, aux chutes broyées.

5. Procédé selon la revendication 4, dans lequel le premier polymère et le deuxième polymère sont des poly(aryléthercétone), le taux volumique de fibres continues est supérieur à 50 % et le taux volumique de fibres discontinues est supérieur à 40 %.

6. Procédé selon la revendication 5, dans lequel le premier et le deuxième polymère sont choisis parmi LMPAEK, PEEK et PEK.

7. Procédé selon la revendication 4, dans lequel la deuxième température de fusion est supérieure à la première température de fusion.

8. Procédé selon la revendication 4, dans lequel la deuxième température de fusion est inférieure à la première température de fusion.

9. Procédé selon a revendication 8, dans lequel le premier polymère est un ploy(aryléthercétone) et le deuxième polymère est un PEI.

10. Procédé selon la revendication 1, dans lequel le compound obtenu à l'étape vi) est un fil bobiné et l'étape vii) est réalisée par un procédé de fabrication additive mettant en oeuvre la fusion du fil.

11. Procédé selon la revendication 1, dans lequel le compound obtenu à l'étape vi) est un granulé et l'étape vii) est réalisée par injection plastique.

12. Procédé selon la revendication 1, dans lequel les étapes vii) et viii) sont réalisées par surmoulage de la deuxième pièce composite sur la pièce structurelle (200).

13. Procédé selon la revendication 1, dans lequel l'étape viii) est réalisée par soudure de la deuxième pièce composite sur la pièce structurelle (200).

14. Procédé selon la revendication 1, dans lequel l'étape viii) est réalisée par co-consolidation de la deuxième pièce composite et de la pièce structurelle (400).

## Patentansprüche

1. Verfahren zur Herstellung von zwei Verbundteilen, die ein erstes Strukturteil (200, 400) aus einem Verbundmaterial, das durch Endlosfasern mit einem Volumengehalt an Fasern in einer Matrix aus einem ersten thermoplastischen Polymer mit einer ersten Schmelztemperatur verstärkt ist, und ein Verbundteil (410, 600) umfassen, das eine Faserverstärkung, die Segmente aus Endlosfasern entsprechend dem Gehalt an diskontinuierlichen Fasern umfasst, und eine thermoplastische Matrix mit einer zweiten Schmelztemperatur umfasst, die das erste thermoplastische Polymer enthält, wobei das Verfahren die folgenden Schritte umfasst: :
i) Herstellung eines Vorformlings (110, 500) aus Verbundwerkstoff mit einer durchgehenden Verstärkung, der zur Herstellung des Bauteils geeignet ist;
i) Herstellung des Bauteils (200, 400) aus dem Verbundwerkstoff-Vorformling mit durchgehender Verstärkung;
(iii) Beschneiden des Strukturteils (200, 400);
wobei die Schritte (i) und (iii) Abfälle (120, 220) erzeugen, und ferner die folgenden Schritte umfassen:
iv) Sammeln (310) der in den Schritten i) und iii) hergestellten Abfälle (120, 220);
v) Zerkleinern (320) der in Schritt iv) gesammelten Abfälle zur Gewinnung von Spänen aus Verbundsegmenten
vi) Compoundieren (330) der in Schritt v) erhaltenen Chips zur Gewinnung einer Verbindung;
vii) Herstellung des zweiten Verbundteils (410, 600) durch Formgebung der in Schritt vi) erhaltenen Verbindung;
**dadurch gekennzeichnet, dass** es einen Schritt umfasst:
viii) Verbinden des zweiten Verbundstoffteils mit dem Strukturteil.

2. Verfahren nach Anspruch 1, wobei das erste Polymer ein PPS ist, der Volumengehalt an kontinuierlichen Fasern mehr als 40 % beträgt und der Volumengehalt an diskontinuierlichen Fasern mehr als 40 % beträgt.

3. Verfahren nach Anspruch 1, wobei eine größere Länge der in Schritt v) erhaltenen Verbundsegmente zwischen 2 mm und 15 mm, vorzugsweise zwischen 4 mm und 10 mm und noch bevorzugter zwischen 8 mm und 10 mm liegt.

4. Verfahren nach Anspruch 1, wobei Schritt vi) einen Anpassungsschritt (335) umfasst, der die Zugabe eines zweiten Polymers, das eine zweite Schmelztemperatur aufweist und mit dem ersten Polymer mischbar ist, zu den zerkleinerten Abfällen während des Compoundierens umfasst.

5. Verfahren nach Anspruch 4, wobei das erste Polymer und das zweite Polymer vom Poly(aryletherketon)-Typ sind, der Volumengehalt an kontinuierlichen Fasern mehr als 50 % beträgt und der Volumengehalt an diskontinuierlichen Fasern mehr als 40 % beträgt.

6. Verfahren nach Anspruch 5, wobei das erste Polymer und das zweite Polymer ausgewählt sind aus LMPAEK@, PEEK und PEK.

7. Verfahren nach Anspruch 4, wobei die zweite Schmelztemperatur höher ist als die erste Schmelztemperatur.

8. Verfahren nach Anspruch 4, wobei die zweite Schmelztemperatur niedriger ist als die erste Schmelztemperatur.

9. Verfahren nach Anspruch 1, wobei das erste thermoplastische Polymer ein Poly(aryletherketon) ist und das zweite Polymer ein PEI ist.

10. Verfahren nach Anspruch 1, wobei die in Schritt vi) erhaltene Verbindung ein aufgespulter Draht ist und Schritt vii) durch additive Fertigung durchgeführt wird, die das Schmelzen des Drahtes implementiert.

11. Verfahren nach Anspruch 1, wobei die in Schritt vi) erhaltene Verbindung ein Pellet ist und Schritt vii) durch Kunststoffeinspritzung durchgeführt wird.

12. Verfahren nach Anspruch 1, wobei die Schritte vii) und viii) durch Umspritzen des zweiten Verbundstoffteils auf dem Strukturteil (200) durchgeführt werden.

13. Verfahren nach Anspruch 1, wobei Schritt viii) durch Schweißen des zweiten Verbundstoffteils an das Strukturteil (200) durchgeführt wird.

14. Verfahren nach Anspruch 1, wobei Schritt viii) durch gemeinsames Verfestigen des zweiten Verbundteils und des Strukturteils (200) durchgeführt wird.

## Claims

1. A method for making two composte parts comprising a first structural part (200, 400) made of a composite material reinforced by continuous fibers with a volume content of fiber s in a matrix made of a first thermoplastic polymer with a first melting temperature, and a composite part (410, 600) comprising a fibrous reinforcement comprising segments of continuous fibers according to discontinuous fiber content and a thermoplastic matrix with a second melting temperature and comprising the first thermoplastic polymer, the method comprising the steps of :
i) obtaining a composite preform (110, 500) with a continuous reinforcement and adapted to obtain the structural part;
i) obtaining the structural part (200, 400) from the composite preform with continuous reinforcement;
(iii) Triming the structural part (200, 400);
wherein steps (i) and (iii) make scraps (120, 220), and further comprising the steps of:
iv) collecting (310) the scraps (120, 220) made in steps i) and iii);
v) shredding (320) the scraps collected in step iv) for obtaining chips made of composite segments
vi) compounding (330) the chips obtain in step v) for obtaining a compound;
vii) obtaining the second composite part (410, 600) by shaping the compound obtained in step vi);
**characterized in that** it comprises a step of:
viii) bonding the second composite part to the structural part.

2. The method of claim 1, wherein the first polymer is a PPS, the volume content of continuous fibers is greater than 40% and the volume content of discontinuous fibers is greater than 40%.

3. The method of claim 1, wherein a greater length of the composite segments obtained in step v) is comprised between 2 mm and 15 mm, preferably between 4 mm and 10 mm and more preferentially between 8 mm and 10 mm.

4. The method of claim 1, wherein step vi) comprises an adjustment step (335) comprising the addition of a second polymer having a second melting temperature and miscible with the first polymer to the shredded scraps during compounding.

5. The method of claim 4, wherein the first polymer and the second polymer are of a poly(aryl ether ketone) type the volume content of continuous fibers is greater than 50% and the volume content of discontinuous fibers is greater than 40%.

6. The method of claim 5, wherein the first polymer and the second polymer are selected among LMPAEK@, PEEK. and PEK.

7. The method of claim 4, wherein the second melting temperature is greater than the first melting temperature.

8. The method of claim 4, wherein the second melting temperature is lower than the first melting temperature.

9. The method of claim 1, wherein the first thermoplastic polymer is a poly(aryl ether ketone) and the second polymer is a PEI.

10. The method of claim 1, wherein the compound obtained in step vi) is a spooled wire and step vii) is carried out by additive manufacturing implementing the melting of the wire.

11. The method of claim 1, wherein the compound obtained in step vi) is a pellet and step vii) is implemented by plastic injection.

12. The method of claim 1, wherein steps vii) and viii) are performed by overmolding the second composite part on the structural part (200).

13. The method of claim 1, wherein step viii) is implemented by welding the second composite part on the structural part (200).

14. The method of claim 1, wherein step viii) is implemented by co-consolidating the second composite part and the structural part (200).
